# EUROPÄISCHE PATENTSCHRIFT

(11) **EP 1 398 208 B1**
(45) Veröffentlichungstag und Bekanntmachung des Hinweises auf die Patenterteilung: **23.02.2005**
(21) Anmeldenummer: 03028543.1
(22) Anmeldetag: 26.09.2002
(51) Int. Cl.: B60P 7/08

(54) **Lastöse für den Laderaum eines Kraftfahrzeuges**
Load buckle for the boot of a vehicle
Boucle de fixation pour le compartiment de chargement d'un véhicule

(30) Priorität: 05.10.2001 DE 10149186
(43) Veröffentlichungstag der Anmeldung: 17.03.2004
(62) Teilanmeldung aus: 02021528.1
(73) Patentinhaber: Bayerische Motoren Werke Aktiengesellschaft, 80809 München (DE); BOS GmbH & Co. KG, 73760 Ostfildern (DE)
(72) Erfinder: Stöckl, Siegfried, 84076 Pfeffenhausen (DE); Schlecht, Werner P., 71665 Vaihingen (DE); Seeg, Thomas, 73760 Ostfildern (DE); Sparrer, Henning, 73274 Notzingen (DE)
(74) Vertreter: Günther, Hans Peter

(56) Entgegenhaltungen:
- US-A- 4 850 769

## Beschreibung

Die Erfindung betrifft eine Lastöse für den Laderaum eines Kraftfahrzeuges.

Derartige Lastösen sind allgemein bekannt und sind im Lade- bzw. Kofferraum eines PKW's starr befestigt. Die Funktion dieser Lastösen, welche auch als Verzurrösen bezeichnet werden und oftmals auch die Form eines Hakens aufweisen, besteht darin, in den Kofferraum zu packende Gegenstände mittels Gurten fest an den Lastösen zu verzurren, um hierdurch ein Verrutschen der Gegenstände während der Fahrt zu verhindern. Es hat sich nämlich in der Vergangenheit gezeigt, dass schwere im Kofferraum befindliche Gegenstände, wenn sie während der Fahrt verrutschen, zu einem anderen Fahrverhalten des PKW's führen, was sich insbesondere in Extremsituationen wie schneller Kurvenfahrt, zu einem Risikomoment auswachsen kann. Zusätzlich besteht die Gefahr, dass bei starken Bremsmanövern die im Kofferraum befindlichen Gegenstände wie "Geschosse" in Richtung Frontscheibe des Fahrzeuges fliegen und hierbei im PKW befindliche Personen verletzen können. All dies kann bei entsprechender Verzurrung der Gegenstände mittels Gurten an den Lastösen verhindert werden.

Es hat sich jedoch als nachteilig herauskristallisiert, dass die bekannten starr montierten Lastösen keine Anpassung hinsichtlich der Verzurrung an unterschiedliche Gegenstandsformen zulassen. Mit anderen Worten, in Abhängigkeit von der konkreten Form und des konkreten Gewichts der Gegenstände ist es oftmals nur schwerlich möglich, eine adäquate Verzurrung zu erzielen, um die o.g. negativen Aspekte der Gegenstände bei fehlender Verzurrung zu kompensieren.

Aus der EP 1 108 608 ist bereits eine Schiene mit einem im Wesentlichen U-förmigen Profil bekannt, bei der an gegenüberliegenden Seitenrändern der Schiene Aussparungen ausgebildet sind, die als Rastpositionen dienen. In der Schiene ist eine an einem Grundkörper angeordnete Lastöse verschiebbar angeordnet. Auf den Grundkörper wirkt eine Feder, die sich zum einen an dem Grundkörper als auch an einem Boden der Schiene abstützt. Die Größe des Grundkörpers ist so bemessen, dass der Grundkörper in den Aussparungen einrasten kann. Zur Entriegelung aus der Rastposition ist der Grundkörper gegen die Feder in Richtung des Schienenbodens verschiebbar.

Aus der DE 14 31 569 ist bereits eine Lastöse bekannt, die an einem Grundkörper befestigt ist, der an seinen Seitenrändern in Querrichtung zur Verschieberichtung überstehende, kreisbogenförmige Vorsprünge aufweist. Die Lastöse ist in einer Schiene verschiebbar angeordnet. Die Schiene weist den Vorsprüngen entsprechende, als Verrastungspositionen dienende Öffnungen auf, so dass die Lastöse aus der Schiene durch Anheben entnehmbar ist. An der Lastöse ist ferner eine verschwenkbare Verriegelungsvorrichtung angeordnet. Die verschwenkbare Verriegelungsvorrichtung ist in einer gezeigten Ausführungsform eine kreisförmige Platte. Nach dem Einführen der verschwenkbaren Verriegelungsvorrichtung in eine der vorhandenen, entsprechend großen Öffnungen wird die Verriegelungsvorrichtung in der Schiene zunächst verschoben und dann in einer Verriegelungsposition verriegelt.

Aus der US 4 850 769, die dem Oberbegriff des Anspruchs 1 entspricht, ist ebenfalls eine Schiene bekannt, die eine T-förmige Aussparung aufweist. An den einander gegenüberliegenden Seitenrändern sind kreisbogenförmige Aussparungen vorgesehen, in die ein federbelasteter Sperrstift verrastbar ist.

Es ist Aufgabe der Erfindung, Lastösen mit einer Vorrichtung zur Befestigung der Lastösen im Laderaum eines Kraftfahrzeugs zu schaffen, die einen einfachen Aufbau aufweisen.

Diese Aufgabe wird durch eine erfindungsgemäße Lastöse gelöst, bei der die Vorrichtung zur Befestigung der Lastöse eine schienenförmige Halterung ist, die aus einem inneren C-Profil sowie einem äußeren Profil besteht. Dieser Aufbau hat den Vorteil, dass sich die Möglichkeit bietet, die Bohrungen für das Zusammenwirken mit dem Sperrelement direkt in das innere Profil einzustanzen, sodass das zusätzliche Vorsehen eines Lochstreifens entfällt. Weiterhin bedingt das äußere Profil die vorteilhafte Wirkung, dass die Seitenverkleidung mittels des äußeren Profils befestigbar ist sowie der Ladeboden darin aufgenommen werden kann. Folglich ergibt sich eine Vereinfachung der Befestigung der Seitenverkleidung im Laderaum eines Fahrzeuges sowie eine ansehnliche Optik.

Bei der erfindungsgemäßen Lastöse und der erfindungsgemäßen Vorrichtung zur Befestigung der Lastöse ist eine flexible Verzurrung bzw. Fixierung von Gegenständen im Laderaum eines Kraftfahrzeuges möglich.

Die erfindungsgemäße Lastöse ist je nach Form des zu sichernden Gegenstandes an adäquater Stelle in eine schienenförmige Halterung einbringbar und/oder darin verschiebbar, und ist sodann nach dem Auffinden des idealen Fixierungspunktes der schienenförmigen Halterung an dieser Stelle arretierbar, indem die Lastöse ein Sperrelement aufweist, das in entsprechende Bohrungen der schienenförmigen Halterung einrasten kann. Demgemäß kann für jeden zu sichernden Gegenstand der ideale Halterungspunkt für die Lastöse eingestellt werden, wodurch ein hoher Sicherheitsgrad für die mitfahrenden Personen im Kraftfahrzeug erzielt wird. Natürlich ist eine adäquate Verzurrung eines Gegenstandes im Laderaum eines Kraftfahrzeugs an den erfindungsgemäßen Lastösen auch insofern vorteilhaft, als eine Bruchgefahr des zu transportierenden Gegenstandes durch ein Herumpoltern im Laderaum, etwa bei Kurvenfahrt des Kraftfahrzeuges, verhindert wird. Schließlich ist dieses Zusammenwirken zwischen Bohrung und Sperrstift einerseits kostengünstig realisierbar und andererseits sehr zuverlässig und belastbar.

Durch die in den Unteransprüchen aufgeführten Merkmale sind vorteilhafte Weiterbildungen der im Anspruch 1 angegebenen Lastöse möglich.

Nach einer vorteilhaften Ausgestaltung ist die Lastöse im Wesentlichen kontinuierlich in der schienenförmigen Halterung verschieb- und arretierbar, sodass eine noch optimalere Einstellung der Lastöse an den bzw. die zu sichernden Gegenstände möglich ist.

Bevorzugt ist das Sperrelement als Sperrstift ausgebildet.

Vorteilhafterweise sind die Bohrungen in Form von Lochstreifen in die schienenförmige Halterung einbringbar, sodass beliebige Adaptionen an die jeweiligen Anforderungen hinsichtlich der Verstellbarkeit der Lastöse innerhalb der schienenförmigen Halterung erzielt werden können. Sollte also eine grobe Rasterung hinsichtlich der Bohrungen in den schienenförmigen Halterungen genügen, so können Lochstreifen eingesetzt werden, deren Bohrungen einen größeren Abstand voneinander aufweisen. Ist eine genauere Justierung bzw. Einstellbarkeit der Lastöse erforderlich, muss auf Lochstreifen mit größerer Bohrungsanzahl zurückgegriffen werden.

Um ein möglichst schnelles und gleichzeitig einfaches Verrasten der Sperrstifte in die Bohrungen der Lochstreifen innerhalb der schienenförmigen Halterung zu erzielen, ist der Sperrstift in seine Rastposition vorgespannt.

Da die Lastöse natürlich einerseits aus Kostengründen einfach und mit geringem zeitlichen Aufwand herstellbar und andererseits mit einem hohen Zuverlässigkeits- und Belastbarkeitsgrad ausgestaltet sein muss, weist die Lastöse einen Grundkörper und einen damit verbundenen Bügel auf, wobei der Grundkörper in der schienenförmigen Halterung geführt ist. Hierdurch besteht die Lastöse im Wesentlichen aus zwei Komponenten, die in einfacher Form herstellbar sind. Zudem hat sich die Verwendung von Bügeln auch schon bei den bekannten starr fixierten Lastösen bewährt. Auch besteht die Möglichkeit, unterschiedliche Bügelgrößen und -stärken mit dem Grundkörper zu kombinieren, um je nach Anwendungsfall die passende erfindungsgemäße Lastöse einsetzen zu können.

Gemäß einer bevorzugten Ausführungsform der Erfindung weist der Grundkörper einen Taster, insbesondere einen Wipptaster zur Betätigung des Sperrstifts auf. Derartige Taster sind in einfacher Form in den Grundkörper zu integrieren und bedingen eine direkte Umsetzung ihrer Betätigung in eine Bewegung des Sperrstiftes entweder in die Rastposition oder in die gelöste Position. Wipptaster stellen hierbei sicher, dass schon ihre jeweilige Stellung kennzeichnet, ob sich der Sperrstift in seiner Rastposition oder gelösten Position befindet.

Vorzugsweise ist der Grundkörper mit dem Sperrstift verbunden, sodass bei einem Herausnehmen der Lastöse aus der schienenförmigen Halterung nur ein Bauteil zu bedienen und handhaben ist.

Alternativ zu der reinen Befestigungsfunktion der erfindungsgemäßen Lastöse kann die Lastöse auch mit Zusatzteilen für Kraftfahrzeuge, insbesondere Stauboxen und Fahrradhalter, verbindbar oder einstückig ausbildbar sein. Dies hat den offensichtlichen Vorteil, dass die jeweiligen Zusatzteile wie Stauboxen und Fahrradhalter, sicher in die schienenförmige Halterung einbringbar, darin verschiebbar sowie anschließend arretierbar sind.

Natürlich kann die schienenförmige Halterung in Form von einer oder mehreren Schienen in den Laderaum und/oder in die Rückenlehne der Rücksitze integriert werden. Dies bedingt zum einen eine weiterhin ebene Ladefläche, da in diesem Fall die schienenförmige Halterung nicht von der Grundfläche des Laderaumes vorsteht, und zum anderen wird auch der optische Eindruck des Laderaumes durch die Integration der schienenförmigen Halterung nicht beeinträchtigt.

Weitere Vorteile und Merkmale der vorliegenden Erfindung werden aus der nachfolgend detaillierten Beschreibung eines Ausführungsbeispieles einer erfindungsgemäßen Lastöse im Zusammenhang mit den beigefügten Zeichnungen ersichtlich. Es zeigen:
- Fig. 1: eine perspektivische Explosionsansicht eines Ausführungsbeispiels einer Lastöse mit zugehöriger Schiene,
- Fig. 2: eine Frontalansicht der in eine Schiene eingebrachten Lastöse von Fig. 1,
- Fig. 3: eine perspektivische Ansicht der Lastöse von Fig. 1, welche in eine Schiene eingebracht ist,
- Fig. 4: eine perspektivische Draufsicht auf die Lastöse von Fig. 2,
- Fig. 5: eine perspektivische Ansicht eines Ausführungsbeispiels einer erfindungsgemäßen Lastöse, und
- Fig. 6: eine perspektivische Ansicht der Lastöse gemäß Fig. 5, welche in eine Schiene mit Doppelprofil eingebracht ist.

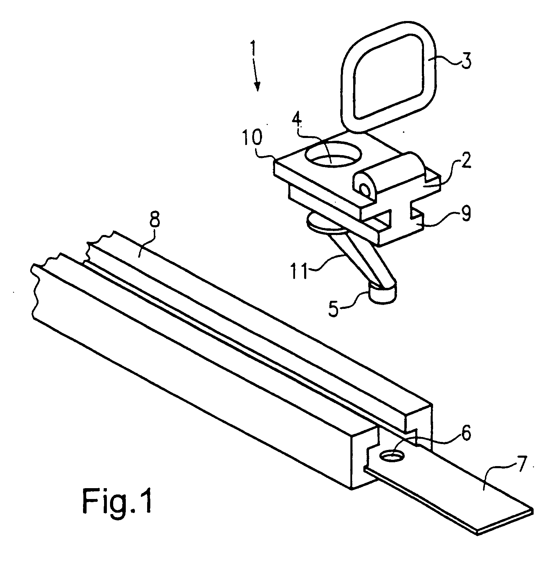

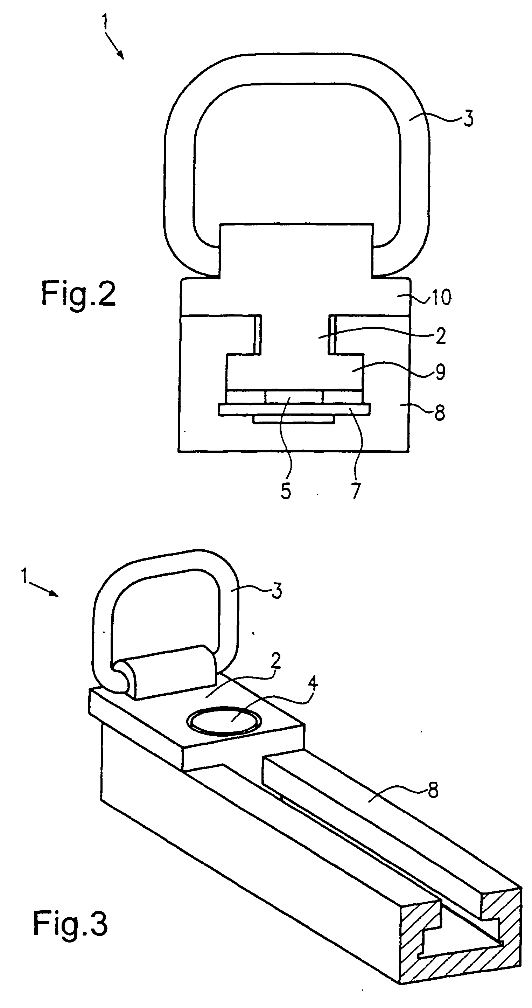

In Fig. 1 ist eine Lastöse 1 in perspektivischer Explosionsansicht dargestellt. Die Lastöse 1 umfasst hierbei einen Grundkörper 2, an dem ein Stahlbügel 3 befestigt ist. In den Stahlbügel 3 greift zum Zwecke der Verzurrung von Gegenständen in Laderäumen von Kraftfahrzeugen etwa ein Gurt oder ein Seil ein. In der in Fig. 2 dargestellten Ansicht der Lastöse 1 ist der Stahlbügel 3 fest mit dem Grundkörper 2 verbunden. Alternativ kann der Stahlbügel 3 auch austauschbar mit dem Grundkörper 2 kombiniert werden. Natürlich kann auch der Stahlbügel 3 unterschiedliche Formen, je nach Einsatzform, aufweisen.

Zusätzlich zur Befestigung für den Stahlbügel 3 ist auf der Oberseite des Grundkörpers 2 in Fig. 1 eine Taste 4 vorgesehen, die mit einem an der Unterseite des Grundkörpers 2 befindlichen Sperrstift 5 verbunden ist. Das heißt, bei Betätigung der Taste 4 bewegt sich der Sperrstift 5 in Fig. 1 in Vertikalrichtung entweder in seine verrastete Position in eine Bohrung 6 eines Lochstreifens 7 innerhalb der Schiene 8 oder in eine gelöste Position, in welcher der Grundkörper 2 innerhalb der Schiene 8 verschiebbar ist.

Um diese Verschiebbarkeit des Grundkörpers 2 in der Schiene 8 zu erzielen, weist der Grundkörper 2, wie in Fig. 1 dargestellt, eine doppelte T-Form auf, wobei der untere Horizontalschenkel 9 innerhalb der Schiene 8, wie insbesondere aus Fig. 2 ersichtlich, geführt ist und der obere Horizontalschenkel 10 auf der Oberseite der Schiene 8 aufliegt.

Schließlich ist der Sperrstift 5 noch mit einem Lagerbolzen 11 ausgebildet, der eine adäquate Lagerung des Sperrstiftes in einer gelösten Position an der Unterseite des horizontalen Schenkels 9 bedingt. In Fig. 2 ist die Lastöse 1 im eingeführten Zustand in der Schiene 8 in Frontalansicht dargestellt. Fig. 2 ist hierbei insbesondere zu entnehmen, dass der Grundkörper 2 nebst Sperrstift 5 über dem Lochstreifen verschiebbar geführt ist und, obgleich nicht dargestellt, in der verrasteten Position in eine Bohrung 6 eingreift.

Wie insbesondere auch Fig. 1 zu entnehmen ist, ist der Lochstreifen 7 in die Schiene 8 einführbar und kann somit auch ausgetauscht werden, um je nach Anforderungen, Lochschienen mit mehr oder weniger Bohrungen zu verwenden.

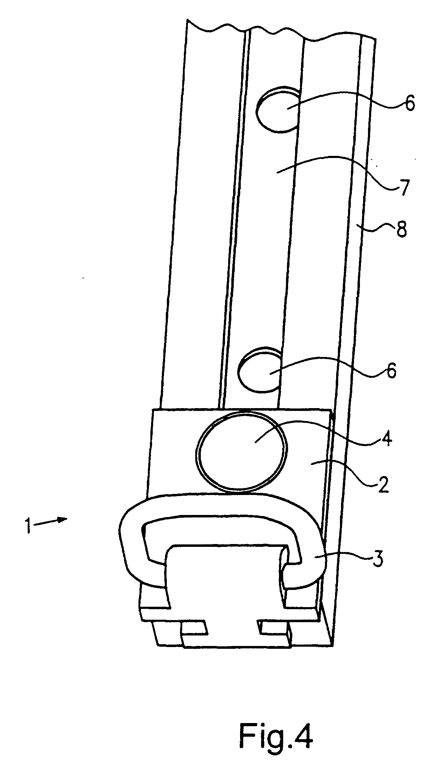

Schließlich zeigen Fig. 3 und 4 noch weitere Ansichten der Lastöse 1.

Obgleich nicht dargestellt, kann die Schiene 8 entweder direkt im Laderaum eines PKW's integriert werden oder aber auch nachträglich im Laderaum befestigt werden. Natürlich besteht die Möglichkeit, mehrere Schienen und mehrere Lastösen im Laderaum eines Kraftfahrzeuges einzusetzen. Neben der Grundfunktion der Lastöse 1 kann diese auch mit Zusatzteilen für Kraftfahrzeuge, insbesondere Stauboxen und Fahrradhalter, verbunden werden, um auch eine sichere Arretierung dieser Elemente im Laderaum sicherzustellen. Neben der Integration der Schienen 8 im Laderaum besteht natürlich auch die Möglichkeit, diese Schiene 8 an der dem Laderaum zugewandten Rückseite der Rücklehne zu integrieren, um auch hier Lastösen einzusetzen.

Abschließend ist auch darauf hinzuweisen, dass natürlich mehrere Schienen in unterschiedlichen Ausrichtungen im Laderaum als auch der Rückseite der Rücklehne angebracht werden können. Neben der unterschiedlichen Gestaltung der Schiene können natürlich auch an Stelle der Taste 4 andere Betätigungsorgane, wie etwa Wippen oder dergleichen, eingesetzt werden. Auch hat es sich als vorteilhaft herauskristallisiert, wenn der Sperrstift 5 in seine Rastposition vorgespannt wird, um ein einfaches und schnelles Verstellen der Lastöse 1 zu erzielen. Die Vorspannung des Sperrstiftes 5 in seine Rastposition bedingt nämlich, dass nach einem Lösen des Sperrstiftes 5 sowie anschließendem Verschieben des Grundkörpers 2 in der Schiene 8 der Raststift 5 unverzüglich bei Erreichen der Zielposition des Grundkörpers 2 entlang der Schiene 8 in die nächstgelegene Bohrung 6 eingreift. Demgemäß ist keine weitere Betätigung des Sperrstiftes 5 durch die Taste 4 erforderlich.

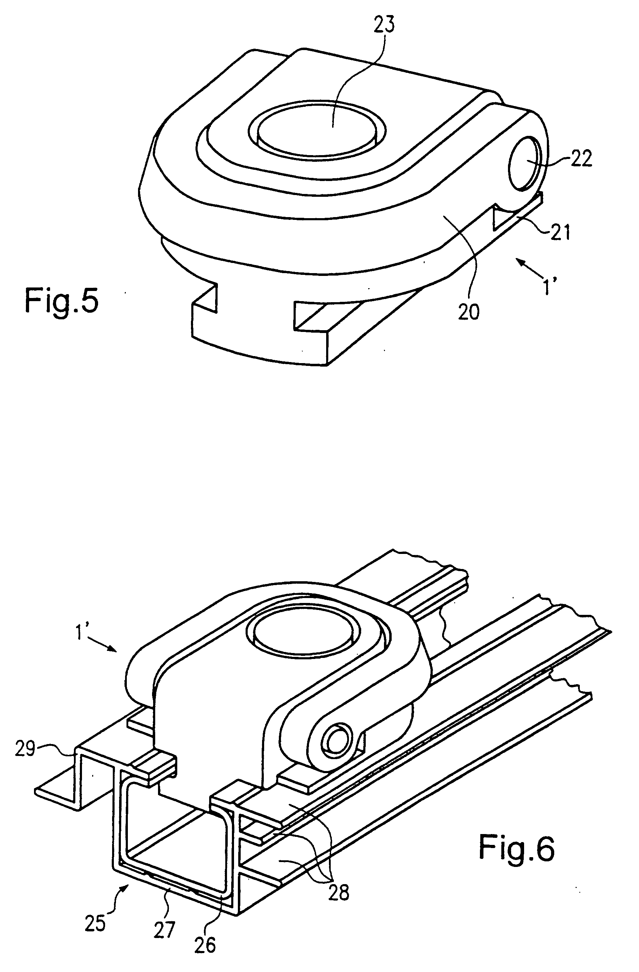

In Fig. 5 ist ein Ausführungsbeispiel einer erfindungsgemäßen Lastöse 1' dargestellt. Bei dieser Lastöse 1' ist ein Bügel 20 um einen im Grundkörper 21 gelagerten Bolzen 22 schwenkbar gelagert. Der Grundkörper 21 weist hierbei eine ähnliche Form wie der Grundkörper 3 der Lastöse 1 auf, jedoch wurden die über eine Schiene 25 überstehenden Kanten abgerundet, wie insbesondere den Fig. 5 und 6 entnehmbar ist. Zudem steht bei der erfindungsgemäßen Lastöse 1' im eingeschwenkten Zustand des Bügels 20 gemäß Fig. 5 die Taste 23 über den Bügel 20 hervor, sodass eine leichte Betätigung der Taste 23 auch bei schlechten Lichtverhältnissen möglich ist. Bezüglich der konkreten geometrischen Ausgestaltung der erfindungsgemäßen Lastöse 1' wird explizit auf die Fig. 5 Bezug genommen.

In Fig. 6 ist nunmehr eine Kombination der erfindungsgemäßen Lastöse 1' mit modifizierter Schiene 25 in perspektivischer Ansicht dargestellt. Die in Bezug auf die Schiene 8 der Lastöse 1 abgewandelte Schiene 25 des Ausführungsbeispiels der erfindungsgemäßen Lastöse 1' besteht aus zwei Profilen, nämlich einem inneren C-Profil 26 sowie einem äußeren Profil 27. Im Gegensatz zu dem obengenannten Beispiel sind die mit einem nicht dargestellten Sperrelement zusammenwirkenden (nicht dargestellten) Bohrungen direkt in das innere Profil 26 eingebracht,
wohingegen beim eingangs genannten Beispiel, wie oben beschrieben, die Bohrungen 6 in einen Lochstreifen 7 eingearbeitet sind, der wiederum in die Schiene 8 eingeschoben wird. Diese Einarbeitung der Bohrungen direkt in das innere Profil 26 wird dadurch ermöglicht, dass sich zwischen den beiden Grundflächen sowie den jeweiligen Seitenflächen des inneren und äußeren Profils 26, 27 ein vorgegebener Abstand befindet, sodass ein Sperrelement der Lastöse 1' durch die Bohrungen im inneren Profil 26 hindurchtreten kann, ohne in Kontakt oder Eingriff mit dem äußeren Profil 27 zu gelangen.

Diese modifizierte Ausgestaltung der Schiene 25 ermöglicht natürlich auch, die Bohrungen nicht nur in die Grundfläche der inneren Schiene 26, sondern auch in die Seitenflächen, je nach Anwendungsfall, einzuarbeiten, gleichzeitig jedoch eine adäquate Funktionsweise zu erzielen.

Wie in Fig. 6 dargestellt, ist die äußere Schiene 27 an ihren beiden Außenseiten mit entsprechenden Zusatzelementen 28, 29 ausgebildet, die einerseits zur Aufnahme des Ladebodens und andererseits zur Befestigung der Seitenverkleidung des Laderaumes eines PKW's dienen. Alternativ zu den dargestellten Elementen 28, 29 der Fig. 6, können natürlich auch je nach Einsatz der erfindungsgemäßen Lastöse 1' mit modifizierter Schiene 25 anders gestaltete Zusatzelemente an der äußeren Schiene 26 vorgesehen werden.

Da die Funktionsweise der Lastöse 1' im Wesentlichen derjenigen der Lastöse 1 entspricht, wird diesbezüglich auf die vorhergehende Erläuterung in Verbindung mit der Lastöse 1 verwiesen. Natürlich besteht auch die Möglichkeit, den Grundkörper 2 mit zugeordneten Bauteilen in einer Schiene 25 sowie den Grundkörper 21 mit zugeordneten Bauteilen in einer Schiene 8 einzusetzen.

Schließlich ist noch darauf hinzuweisen, dass sowohl die Schiene 8, als auch die Schiene 25 mit Öffnungen versehen werden können, die einen Einsatz oder eine Entnahme der Verzurrösen 1, 1' ermöglichen. Ferner sind die Schienen 8, 25 mit geeigneten Schwächungen des Profilquerschnitts ausgestaltet, sodass im Falle eines Heckcrashes die Schienen ausknicken können und nicht zu einer Verletzung von im Fond sitzenden Personen führen.

Die vorhergehende Beschreibung des Ausführungsbeispieles gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Lastöse (1) mit einer schienenförmigen Halterung (8) für den Laderaum eines Kraftfahrzeuges, wobei die Lastöse (1) in der schienenförmigen Halterung (8) einbringbar und/oder darin verschieb- und arretierbar ist, wobei die Lastöse (1) mit einem Sperrelement (5) ausgebildet ist, das in entsprechende Bohrungen (6) der schienenförmigen Halterung (8) einrasten kann, **dadurch gekennzeichnet, dass** die schienenförmige Halterung (8) aus einem inneren C-Profil (26) sowie einem äußeren Profil (27) besteht.

2. Lastöse nach Anspruch 1, **dadurch gekennzeichnet, dass** die Lastöse (1) im Wesentlichen kontinuierlich in der schienenförmigen Halterung (8) verschieb- und arretierbar ist.

3. Lastöse nach Anspruch 1 oder 2, **dadurch gekennzeichnet, dass** das Sperrelement (5) als Sperrstift ausgebildet ist.

4. Lastöse nach einem der vorhergehenden Ansprüche, **dadurch gekennzeichnet, dass** die Bohrungen (6) in Form von Lochstreifen (7) in die schienenförmige Halterung (8) einbringbar sind.

5. Lastöse nach einem der Ansprüche 1 bis 3, **dadurch gekennzeichnet, dass** die Bohrungen (6) für das Zusammenwirken mit dem Sperrelement (5) direkt in dem inneren Profil (26) ausgebildet sind.

6. Lastöse nach einem der vorhergehenden Ansprüche, **dadurch gekennzeichnet, dass** der Sperrstift (5) in seiner Rastposition vorgespannt ist.

7. Lastöse nach einem der vorhergehenden Ansprüche, **dadurch gekennzeichnet, dass** die Lastöse (1) einen Grundkörper (2) und einen damit verbundenen Bügel (3) aufweist, wobei der Grundkörper (2) in der schienenförmigen Halterung (8) geführt ist.

8. Lastöse nach einem der vorhergehenden Ansprüche, **dadurch gekennzeichnet, dass** der Grundkörper (2) mit dem Sperrstift (5) verbunden ist.

## Claims

1. A clevis (1) comprising a rail-like holder (8) for the luggage compartment of a motor vehicle, wherein the clevis (1) is insertable into and/or movable and lockable in the rail-like holder (8), the clevis (1) being formed with a locking element (5) which can engage in corresponding bores (6) in the rail-like holder (8), **characterised in that** the rail-like holder (8) comprises an inner C-profile (26) and an outer profile (27).

2. A clevis according to claim 1, **characterised in that** the clevis (1) is substantially continuously movable and lockable in the rail-like holder (8).

3. A clevis according to claim 1 or 2, **characterised in that** the locking element (5) is a locking pin.

4. A clevis according to any of the preceding claims, **characterised in that** the bores (6) are in perforated strips (7) insertable into the rail-like holder (8).

5. A clevis according to any of claims 1 to 3, **characterised in that** the bores (6) for co-operating with the locking element (5) are directly formed in the inner profile (26).

6. A clevis according to any of the preceding claims, **characterised in that** the locking pin (5) is prestressed in its engaged position.

7. A clevis according to any of the preceding claims, **characterised in that** the clevis (1) comprises a base member (2) connected to a hoop or shackle (3), wherein the base member (2) is guided in the rail-like holder (8).

8. A clevis according to any of the preceding claims, **characterised in that** the base member (2) is connected to the locking pin (5).

## Revendications

1. Oeillet de fixation (1) comportant un support en forme de rail (8) pour le coffre d'un véhicule automobile, l'oeillet de fixation (1) pouvant être introduit dans le support en forme de rail (8) et/ou pouvant être déplacé et bloqué dans celui-ci, l'oeillet de fixation (1) étant configuré avec un élément de blocage (5) qui peut s'engrener dans des perçages correspondants (6) du support en forme de rail (8),
**caractérisé en ce que**
le support en forme de rail (8) se compose d'un profil intérieur en forme de C (26) ainsi que d'un profil extérieur (27).

2. Oeillet de fixation selon la revendication 1,
**caractérisé en ce que**
l'oeillet de fixation (1) peut être déplacé et bloqué pour l'essentiel de façon continue dans le support en forme de rail (8).

3. Oeillet de fixation selon la revendication 1 ou 2,
**caractérisé en ce que**
l'élément de blocage (5) est configuré sous la forme d'une tige de blocage.

4. Oeillet de fixation selon l'une des revendications précédentes,
**caractérisé en ce que**
les perçages (6) peuvent être pratiqués dans le support en forme de rail (8) sous la forme de bandes perforées (7).

5. Oeillet de fixation selon l'une des revendications précédentes,
**caractérisé en ce que**
les perçages (6) destinés à coopérer avec l'élément de blocage (5) sont configurés directement dans le profil intérieur (26).

6. Oeillet de fixation selon l'une des revendications précédentes,
**caractérisé en ce que**
la tige de blocage (5) est précontrainte dans sa position de blocage.

7. Oeillet de fixation selon l'une des revendications précédentes,
**caractérisé en ce que**
l'oeillet de fixation (1) présente un corps de base (2) et un anneau (3) relié à celui-ci, le corps de base (2) étant guidé dans le support en forme de rail (8).

8. Oeillet de fixation selon l'une des revendications précédentes,
**caractérisé en ce que**
le corps de base (2) est relié à la tige de blocage (5).
